# EUROPEAN PATENT APPLICATION

(11) **EP 4 693 677 A1**
(43) Date of publication of application: **11.02.2026**
(21) Application number: 24875029.1
(22) Date of filing: 07.10.2024
(51) Int. Cl.: H01M 50/342

(54) **BATTERY, AND BATTERY PACK AND VEHICLE INCLUDING SAME**

(30) Priority: 05.10.2023 KR 20230132882; 04.10.2024 KR 20240134997
(71) Applicant: LG Energy Solution, Ltd., Seoul 07335 (KR)
(72) Inventor: LEE, So-Yeon, Daejeon 34122 (KR); LEE, So-Ra, Daejeon 34122 (KR); LIM, Seong-Min, Daejeon 34122 (KR); KIM, Young-Jin, Daejeon 34122 (KR)
(74) Representative: Goddar, Heinz J.
(86) International application number: PCT/KR2024/015228
(87) International publication number: WO 2025/075474

(57) **Abstract**

A battery according to an embodiment of the present disclosure may include an electrode assembly having a winding-center hole formed by winding a laminate including a first electrode, a second electrode, and a separator interposed therebetween, a battery housing having an opening formed on one side and capable of accommodating the electrode assembly in an inner space, and a cap configured to cover the opening and including a fixed area fixed to the battery housing and an open area surrounded by the fixed area, and the open area may include a plurality of breaking lines formed to be recessed, and if internal pressure of the battery housing increases to a predetermined pressure or more, at least some of the breaking lines may be broken so that at least one area is bent toward the fixed area and opened.

## Description

### TECHNICAL FIELD

The present disclosure relates to a battery, and a battery pack and a vehicle including the same. This application is based on and claims priority from Korean Patent Application No. 10-2023-0132882, filed on October 05, 2023, and Korean Patent Application No. 10-2024-0134997, filed on October 04, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

In general, if the internal pressure increases inside a secondary battery due to an abnormality thereof, venting may be performed to discharge the internal gas to the outside, thereby reducing the internal pressure. According to this configuration, accidents such as explosions due to a continuous increase in internal pressure may be prevented by effectively venting the internal gas from the abnormal secondary battery.

However, if the venting results in separation of some components of the secondary battery or structural collapse leading to a short circuit, the thermal event may spread, thereby significantly lowering the safety of the secondary battery.

In addition, if particles are rapidly ejected from the electrode assembly due to an increase in internal pressure and/or a thermal event inside the housing, some of the particles ejected from the electrode assembly may block the discharge route of the internal gas before venting occurs due to partial fracture of the housing, thereby hindering smooth venting.

Therefore, it is necessary to develop a secondary battery having a structure capable of preventing or delaying the separation of some components of the secondary battery or structural collapse when the internal pressure increases due to an abnormality in the secondary battery.

### DISCLOSURE

### Technical Problem

According to one aspect, the present disclosure is designed to solve the problems of the related art, and therefore the present disclosure is intended to vent internal gas while maintaining the entirety of battery without some parts being separated when an internal pressure increase and/or a thermal event occurs due to an abnormality in the battery.

According to another aspect, the present disclosure aims to enable smooth venting in an area having the highest internal pressure when an internal pressure increase and/or a thermal event occurs due to an abnormality in the battery.

According to another aspect, the present disclosure aims to enable smooth venting of internal gas by opening the venting area of the battery as widely as possible when an internal pressure increase and/or a thermal event occurs due to an abnormality in the battery.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery including an electrode assembly having a winding-center hole formed by winding a laminate including a first electrode, a second electrode, and a separator interposed therebetween, a battery housing having an opening formed on one side and capable of accommodating the electrode assembly in an inner space, and a cap configured to cover the opening and including a fixed area fixed to the battery housing and an open area surrounded by the fixed area. The open area may include a plurality of breaking lines formed to be recessed, and if internal pressure of the battery housing increases to a predetermined pressure or more, at least some of the breaking lines may be broken so that at least a part of the open area is bent toward the fixed area and opened.

In addition, at least some of the plurality of breaking lines may be formed in a straight line that crosses the open area in one direction.

In addition, at least some of the plurality of breaking lines may be configured to pass through an approximately central area of the cap disposed above the winding-center hole.

In addition, at least some of the plurality of breaking lines may be formed radially from an approximately central area of the cap disposed above the winding-center hole toward the fixed area.

In addition, the open area may be configured such that entirety thereof is bent toward the fixed area and opened.

In addition, at least some of the plurality of breaking lines may be formed to be recessed from one of either an upper surface or a lower surface of the open area.

In addition, at least some of the plurality of breaking lines may be formed to be recessed from both an upper surface and a lower surface of the open area.

In addition, the open area may further include a bending line formed to be recessed in an area in which the open area is bent.

In addition, at least a part of the bending line may be formed to surround an area where the plurality of breaking lines are formed.

In addition, at least a part of the bending line may be formed near a boundary line between the fixed area and the open area.

In addition, the bending line may be formed to be recessed to a depth less than the breaking line.

According to another aspect of the present disclosure, there is provided a battery pack including a battery module according to the present disclosure.

According to another aspect of the present disclosure, there is provided a vehicle including a battery module or battery pack according to the present disclosure.

### Advantageous Effects

The battery according to various embodiments of the present disclosure, and a battery pack and a vehicle including the same are able to vent internal gas while maintaining the entirety of battery without some parts being separated when an internal pressure increase and/or a thermal event occurs due to an abnormality in the battery.

In addition, the battery according to various embodiments of the present disclosure, and a battery pack and a vehicle including the same enable smooth venting in an area having the highest internal pressure when an internal pressure increase and/or a thermal event occurs due to an abnormality in the battery.

In addition, the battery according to various embodiments of the present disclosure, and a battery pack and a vehicle including the same enable smooth venting of internal gas by opening the venting area of the battery as widely as possible when an internal pressure increase and/or a thermal event occurs due to an abnormality in the battery.

The effects obtainable from the embodiments are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a drawing illustrating a battery having an upper opening according to an embodiment of the present disclosure.
FIG. 2 is a drawing illustrating an upper structure of a battery according to an embodiment of the present disclosure.
FIG. 3 is a perspective view illustrating a cap of a battery according to an embodiment of the present disclosure.
FIG. 4 is a perspective view illustrating opening of a cap of a battery according to an embodiment of the present disclosure.
FIG. 5 is a cross-sectional perspective view of a cap of a battery according to an embodiment of the present disclosure.
FIG. 6 is a cross-sectional perspective view of a cap of a battery according to another embodiment of the present disclosure.
FIG. 7 is a perspective view of a cap of a battery according to another embodiment of the present disclosure.
FIG. 8 is a perspective view illustrating opening of a cap of a battery according to another embodiment of the present disclosure.
FIG. 9 is a cross-sectional perspective view of a shape of a cap of a battery according to another embodiment of the present disclosure.
FIG. 10 is a drawing illustrating a lower structure of a battery according to an embodiment of the present disclosure.
FIG. 11 is a drawing illustrating a battery pack according to an embodiment of the present disclosure.
FIG. 12 is a drawing illustrating a battery, a battery pack including the same, and a vehicle including the same.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

Additionally, to aid understanding of the present disclosure, the accompanying drawings are not drawn to real scales and the dimensions of some elements may be exaggerated. In addition, the same reference numerals may indicate the same elements between different embodiments.

Throughout the specification, unless otherwise stated, respective elements may include a single or a plurality of elements.

Additionally, the expression "an element is 'connected' or 'coupled' to another element" should be understood that the elements may be directly connected or coupled to each other, and that another element may be "interposed" between the elements, or that the elements may be "connected" or "coupled" through another element.

Unless otherwise stated, a singular expression herein may include a plural expression. In this specification, the expression "an element 'is configured as' or 'include' other elements or steps" should be understood that the element may exclude some other elements or steps and that the element may further include additional elements or steps.

Throughout the specification, "A and/or B", unless otherwise stated, may denote "A", "B" or "A and B".

Meanwhile, although terms indicating directions such as upward, downward, left, right, forward, and backward directions are used in this specification, it is obvious to those skilled in the art that these terms are only for convenience of explanation and may vary depending on the position or rotation of the target object or the position of the observer.

In addition, the present disclosure may include various embodiments. Redundant descriptions of substantially the same or similar configurations will be omitted from respective embodiments, and a description will be made based on differences therebetween.

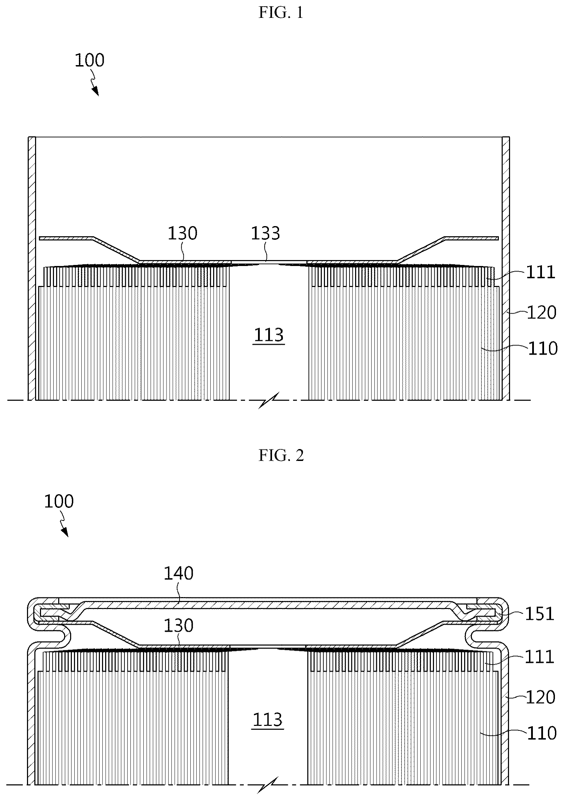

Hereinafter, a battery module according to embodiments of the present disclosure, and a battery pack and a vehicle including the same, will be described in detail with reference to FIGS. 1 to 12.

FIG. 1 is a drawing illustrating a battery having an upper opening according to an embodiment of the present disclosure.

A battery 100 according to an embodiment of the present disclosure may be a cylindrical battery. The battery 100 may include an electrode assembly 110, a battery housing 120, and a cap 140. The battery 100 may further include a first current collector 130.

The electrode assembly 110 may have a winding-center hole 113 formed by winding a laminate including a first electrode, a second electrode, and a separator interposed therebetween. A first uncoated portion 111 formed along a direction in which the electrode assembly 110 is wound may be disposed at one end of the first electrode.

The battery housing 120 may accommodate the electrode assembly 110 in the inner space. An opening leading to the inner space may be formed on one side of the battery housing 120. The battery housing 120 may receive the electrode assembly 110 through the opening.

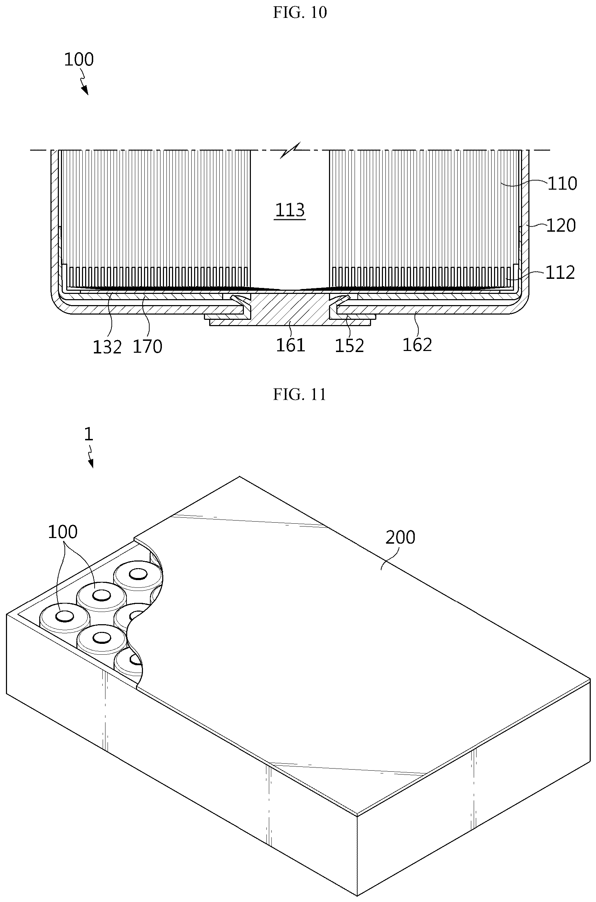

A closed portion (see FIG. 10) may be formed on the other side of the battery housing 120 so as to close the inner space on the opposite side of the opening. The battery housing 120 may include an electrically conductive metal. Although FIG. 1 illustrates the state in which one side of the battery housing 120 is open, the opening may be closed by another configuration.

The first current collector 130 may be disposed on one side of the electrode assembly 110. The first current collector 130 disposed on one side of the electrode assembly 110 may be provided near the opening. For example, the first current collector 130 may be electrically connected to the first uncoated portion 111. The first uncoated portion 111 may be formed at one end of the first electrode constituting the electrode assembly 110. The first uncoated portion 111 may extend in the direction in which the electrode assembly 110 is wound.

The first uncoated portion 111 may be provided in one area of the electrode assembly 110. For example, the first uncoated portion 111 may be formed to extend upward from the electrode assembly 110.

Meanwhile, the first current collector 130 may be configured to electrically connect the first electrode of the electrode assembly 110 and the battery housing 120.

The first current collector 130 may have a current collector hole 133. The current collector hole 133 may be formed at a position corresponding to the winding-center hole 113 of the electrode assembly 110.

Referring to FIG. 2, the first current collector 130 may be configured to be electrically connected to the battery housing 120. For example, the first current collector 130 may be electrically coupled to a beading portion formed by pressing the outer circumferential surface of the battery housing 120 inward.

The battery 100 may include a cap 140 configured to cover the opening formed on one side of the battery housing 120. The cap 140 may be electrically insulated from the electrode assembly 110 and the battery housing 120 so as not to have polarity. For example, a first insulating member 151 may be interposed between the cap 140 and the battery housing 120.

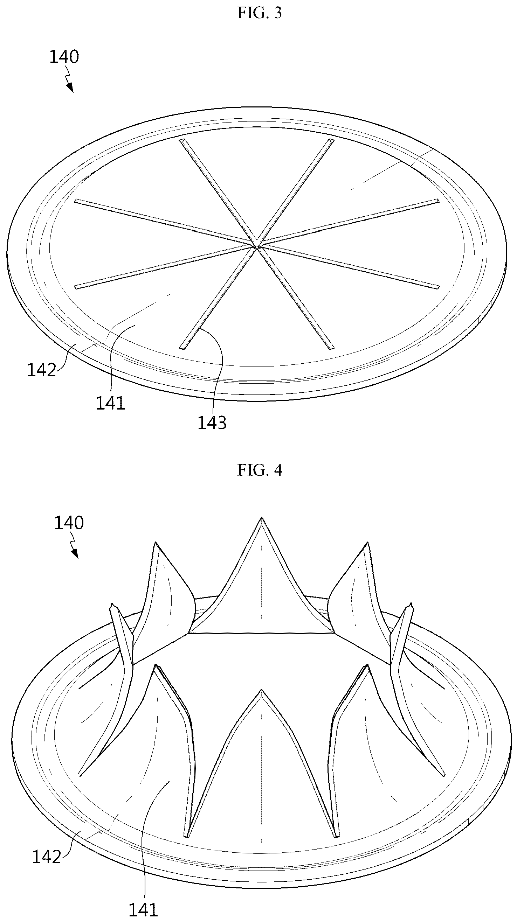

The cap 140 may include a fixed area and an open area. This will be described in detail below with reference to FIGS. 3 and 4.

FIG. 3 is a perspective view illustrating a cap of a battery according to an embodiment of the present disclosure. FIG. 4 is a perspective view illustrating opening of a cap of a battery according to an embodiment of the present disclosure.

The cap 140 may include an open area 141 and a fixed area 142. The fixed area 142 may be configured to be fixed to the battery housing 120 described above with reference to FIGS. 1 and 2. For example, the fixed area 142 is an edge of the cap 140, which may be provided to correspond to the edge of the opening of the battery housing 120. The fixed area 142 may surround the open area 141, and the open area 141 may be an inner area surrounded by the fixed area 142.

The internal temperature of the battery 100 may increase during charging and discharging, and if thermal control is not performed at an appropriate temperature, a thermal event such as ignition or explosion may occur. If a thermal event occurs in the battery 100, the internal pressure of the battery housing 120 may increase due to high-temperature gas or flame.

The open area 141 may be configured to be opened when the internal pressure of the battery housing 120 increases due to a thermal event occurring in the battery 100. For example, the open area 141 may include a plurality of breaking lines 143. The breaking line 143 may be configured as a notched line recessed in the open area 141 and extending in one direction.

In order for the open area 141 to be opened due to an increase in the internal pressure of the battery housing 120, the breaking line 143 may be configured to be weaker than the remaining area of the cap 140. For example, the breaking line 143 may have a smaller thickness than the remaining area of the cap 140.

The area where the open area 141 is opened may be determined depending on the shape of the breaking line 143. If the breaking line 143 is configured as a closed loop, the entirety or part of the open area 141 surrounded by the closed loop may be separated and opened due to an increase in the internal pressure of the battery housing 120, so that the separated part may enter the corresponding battery 100 or another battery 100, thereby causing a problem. In addition, such a problem may occur in a chain reaction between the batteries 100.

According to embodiments of the present disclosure, when the entirety or part of the open area 141 is opened, the opened area may remain in a coupled state without being separated, thereby preventing the aforementioned problem.

Referring to FIG. 4, the entirety or part of the open area 141 may be separated as the internal pressure of the battery housing 120 increases. At this time, at least a part of the open area 141 may be opened by breaking at least a part of the breaking line 143. The open area 141 may be partitioned by the breaking lines 143. The more the breaking lines 143, the more the open area 141 may be divided into areas to be respectively opened.

An internal pressure at which the open area 141 is able to be opened may be appropriately determined according to the type, configuration, size, and shape of the battery 100 and arrangement of components thereof. The more the breaking lines 143 formed in the open area 141, the more the open area 141 may be opened at a lower pressure, and the fewer the breaking lines 143, the higher pressure is required to open the open area 141. Therefore, those skilled in the art may design the open area 141 to be opened at a predetermined internal pressure by appropriately determining the number of breaking lines 143 to be formed in the open area 141.

The open area 141 may be configured to be opened by bending at least one area. The area where the open area 141 is bent may be an area where the breaking line 143 is not disposed. A part of the open area 141 may be opened by breaking the area where the breaking line 143 is disposed and bending the area where the breaking line 143 is not disposed. In this case, the direction in which the part of the open area 141 is bent may be directed to the fixed area 142. Since the fixed area 142 may surround the open area 141, the open area 141 may be bent overall in a direction toward the outside of the cap 140. In order to allow the open area 141 to bend toward the fixed area 142, the breaking line 143 may be formed to avoid the vicinity of the boundary between the open area 141 and the fixed area 142.

According to the above-implemented configuration, since the open area 141 is bent but not completely separated, it is possible to prevent problems that may occur due to a part of the open area 141 being completely separated from the cap 140.

According to the embodiments of the present disclosure, the breaking line 143 may be formed so as not to form a closed loop. For example, referring to FIG. 3, at least some of the plurality of breaking lines 143 may be formed as a straight line that crosses the open area 141. Each breaking line 143 may be formed as a straight line to roughly divide the area of the open area 141 in half. The straight breaking line 143 may have one end and the other end, and the one end and the other end may be disposed near the fixed area 142. According to the present embodiment, since the one end and the other end of the breaking line 143 are disposed in different places, the breaking line 143 may not form a closed loop. A plurality of breaking lines 143 may be formed in this manner.

According to the above-mentioned implemented configuration, when the entirety or part of the open area 141 is opened, the opened part may remain in a coupled state without being separated, so that the risk of a part of the open area 141 being separated may be significantly reduced.

Meanwhile, the largest amount of gas may be generated near the winding-center hole 113 inside the battery housing 120 due to a thermal event occurring in the battery 100, and as a result, the internal pressure may increase the most near the winding-center hole 113. Therefore, a part of the open area 141 corresponding to the winding-center hole 113 (the portion above the winding-center hole 113) is more likely to begin to open due to an increase in the internal pressure of the battery housing 120.

According to an embodiment of the present disclosure, the central area of the cap 140 may be disposed above the winding-center hole 113. The central area of the cap 140 may be disposed at a position corresponding to the winding-center hole 113. The central area of the cap 140 may be identical or similar to the central area of the open area 141. At least some of the plurality of breaking lines 143 may be configured to pass through the approximately central area of the cap 140. The plurality of breaking lines 143 may pass through the approximately central area of the cap 140 so as to meet each other.

In the case where the plurality of breaking lines 143 pass through the approximately central area of the cap 140, the arrangement density of the breaking lines 143 may be maximized around the approximately central area of the cap 140 and/or the open area 141. In this case, the approximately central area of the cap 140 and/or the open area 141 may be the most vulnerable area in the cap 140 and/or the open area 141, and may be opened first due to an increase in internal pressure generated in the winding-center hole 113.

According to the above-implemented configuration, the vulnerable area of the cap 140 and/or the open area 141 may be disposed to correspond to the area where the internal pressure of the battery housing 120 is likely to be maximized when a thermal event occurs in the battery 100, so that gas generated inside the battery housing 120 may be quickly discharged.

According to an embodiment of the present disclosure, at least some of the plurality of breaking lines 143 may be formed radially from the approximately central area of the cap 140 and/or the open area 141 disposed above the winding-center hole 113 toward the fixed area 142. In this case, the breaking lines 143 passing through the approximately central area of the cap 140 and/or the open area 141 may extend to the vicinity of the fixed area 142.

According to the above-implemented configuration, since the plurality of breaking lines 143 formed radially pass through the approximately central area of the cap 140 and/or the open area 141, the arrangement density of the breaking lines 143 may increase as they are closer to the central area of the cap 140 and/or the open area 141. Therefore, similar to the above-described embodiment, according to the above-implemented configuration, the density of the breaking lines 143 is maximized in the central area of the cap 140 and/or the open area 141 where the internal pressure of the battery housing 120 is likely to be maximized, so that gas generated inside the battery housing 120 may be quickly discharged.

The positions and directions of the breaking lines 143 are closely related to the direction in which the open area 141 is opened. For example, in the case where the breaking lines 143 are formed to extend from the central area of the open area 141 toward the fixed area 142, the open area 141 may be opened toward the fixed area 142 by the fracture of the breaking lines 143. Therefore, the breaking lines 143 formed radially toward the fixed area 142 surrounding the open area 141 may induce a part of the open area 141 to open and bend from the central area toward the fixed area 142 positioned outside.

The open area 141 needs to be opened as widely as possible when the internal pressure increases due to the gas generated inside the battery housing 120 while sealing and covering the inside of the battery housing 120.

Referring to FIG. 4, the entirety of the open area 141 may be opened toward the fixed area 142. The fixed area 142 may surround the open area 141, and the open area 141 may be surrounded by the fixed area 142. Various embodiments of the present specification may be applied to the entirety of the open area 141 being opened toward the fixed area 142.

According to the above-implemented configuration, since the entirety of the open area 141 is configured to be opened toward the fixed area 142, gas generated inside the battery housing 120 may be smoothly discharged to the upper side of the battery housing 120 without being blocked by the entirety or part of the cap 140.

In addition, the entirety of the open area 141 may be configured to be opened from the approximately central area of the open area 141 toward the fixed area 142 positioned outside.

According to the above-implemented configuration, when the gas generated from the winding-center hole 113 inside the battery housing 120 pressurizes the approximately central area of the open area 141, the open area 141 may be opened more effectively.

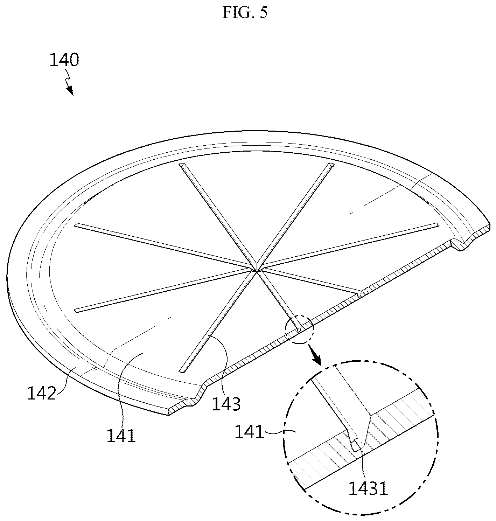

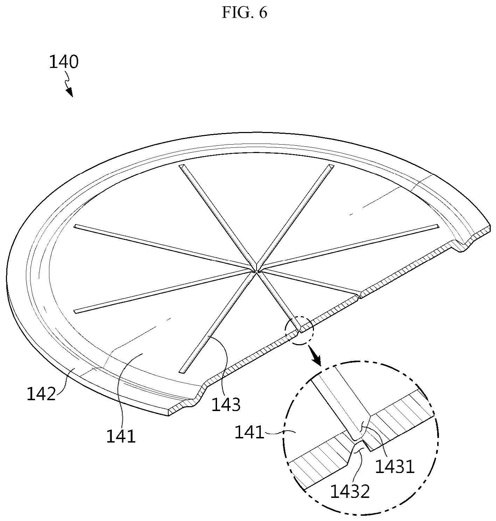

FIG. 5 is a cross-sectional perspective view of a cap of a battery according to an embodiment of the present disclosure. FIG. 6 is a cross-sectional perspective view of a cap of a battery according to another embodiment of the present disclosure.

The breaking line 143 formed in the open area 141 of the cap 140 is configured to be broken as necessary so that the open area 141 is opened. When the internal pressure of the battery housing increases, the entire area of the inner side of the open area 141 may be pressurized, so that the area with relatively low tensile strength may begin to be broken.

In order to open the open area 141, the breaking line 143 may be configured to be weaker than other portions of the open area 141. For example, the breaking line 143 may be configured to be thinner than the remaining area of the cap 140.

At least some of a plurality of breaking lines 143 formed in the open area 141 may be formed to be recessed from one of either the upper surface or lower surface of the open area 141. FIG. 5 shows that a first breaking groove 1431 is formed to be recessed from the upper surface of the open area 141 and to extend in one direction, thereby forming the breaking line 143, but this is exemplary, and the breaking line 143 may also be formed to be recessed from the lower surface of the open area 141.

Referring to FIG. 5, the breaking line 143 may be formed by the first breaking groove 1431 recessed from the upper or lower surface of the open area 141 and extending in one direction. For example, the first breaking groove 1431 may be configured in the shape of a notch that becomes narrower as it gets deeper, but the shape of the first breaking groove 1431 is not limited thereto.

At least some of the plurality of breaking lines 143 formed in the open area 141 may be configured to be recessed from both the upper and lower surfaces of the open area 141. Referring to FIG. 6, the breaking line 143 may be formed by a first breaking groove 1431 formed to be recessed from the upper surface of the open area 141 and a second breaking groove 1432 formed to be recessed from the lower surface thereof, which extend in one direction.

The pressure required to open the open area 141 may vary depending on the shape, arrangement, and recessed depth of the breaking line 143. Therefore, those skilled in the art may determine a pressure at which the open area 141 is to be opened, and select the shape, arrangement, and depth of the breaking line 143 through experiments or tests.

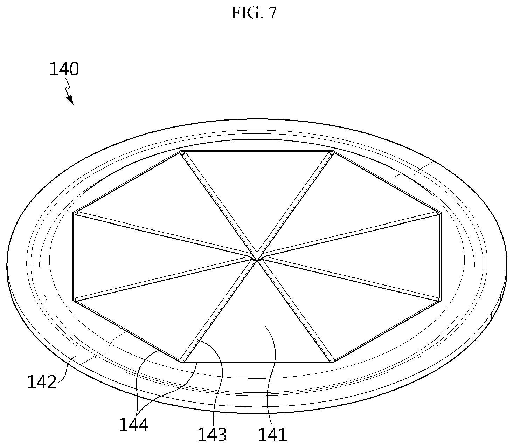

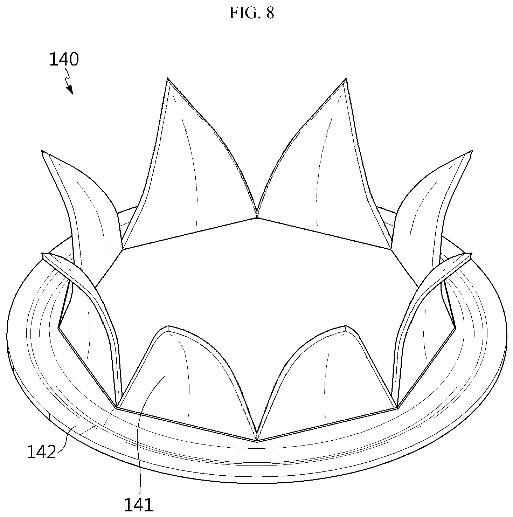

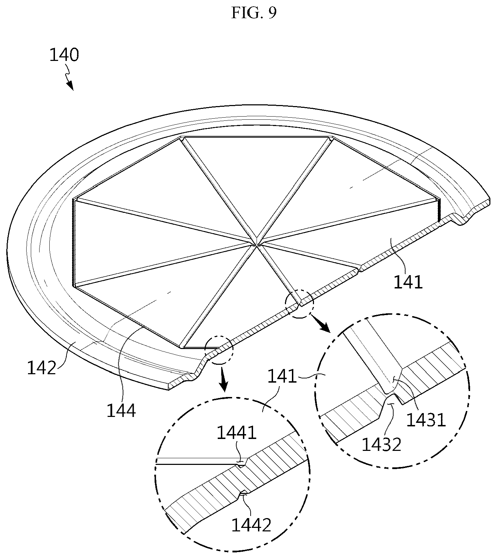

FIG. 7 is a perspective view of a cap of a battery according to another embodiment of the present disclosure. FIG. 8 is a perspective view illustrating opening of a cap of a battery according to another embodiment of the present disclosure. FIG. 9 is a cross-sectional perspective view of a shape of a cap of a battery according to another embodiment of the present disclosure.

The open area 141 may further include a bending line 144 formed to be recessed in an area where the open area 141 is bent. The bending line 144 may be formed to be recessed from the upper surface and/or lower surface of the open area 141.

Referring to FIG. 8, according to the above-implemented configuration, when the entirety or part of the open area 141 is opened, the bending of the open area 141 may be performed around the bending line 144. The bending line 144 may facilitate easy bending of the open area 141 in a desired area. The open area 141 may be induced to bend in a desired direction in a desired area by appropriately designing the bending line 144.

The bending line 144 may induce bending of the open area 141 in a specific area when it is opened. The bending line 144 may guide the direction in which the open area 141 is opened, thereby preventing the open area 141 from being opened in an unintended direction.

As described above, since the breaking line 143 does not form a closed loop, when the entirety or part of the open area 141 is opened, the area may be opened while remaining in a coupled state without being separated. The bending line 144 may form a closed loop with the breaking line 143.

For example, the bending line 144 may connect the end of one breaking line 143 and the end of another breaking line 143. According to the present embodiment, the open area 141 may be surrounded by the breaking lines 143 and the bending line 144. Such an area may have a part that is broken by the breaking line 143 and the remaining part that is bent by the bending line 144 so as to be opened without being entirely separated. According to this implemented configuration, the bending line 144 may form a closed loop with the breaking line 143, thereby inducing the open area 141 to be opened without being separated from the cap 140.

The direction in which the open area 141 is opened may be determined based on the sizes, shapes, positions, number, and disposed areas of the breaking line 143 and bending line 144.

For example, at least a part of the bending line 144 may be formed to surround the area where the plurality of breaking lines 143 are formed. Referring to FIG. 7, the bending line 144 may form a closed loop, and the plurality of breaking lines 143 may be disposed inside the closed loop formed by the bending line 144. According to the above-implemented configuration, the open area inside the closed loop formed by the bending line 144 may be opened by breaking the plurality of breaking lines 143 and may be bent toward the outside of the closed loop.

Meanwhile, the fixed area 142 may be disposed outside the open area 141 so as to surround the open area 141 including the bending line 144. According to the above-implemented configuration, the bending line 144 may induce the open area 141 to bend toward the fixed area 141 disposed outside.

According to an embodiment of the present disclosure, at least a part of the bending line 144 may be formed near the boundary line between the fixed area 142 and the open area 141.

For example, the fixed area 142 may surround the open area 141, and the boundary line between the fixed area 142 and the open area 141 may also surround the open area 141, and the bending line 144 may also surround the open area 141.

If the internal pressure of the battery housing increases, the open area 141 may be opened by bending an arbitrary area. For example, if the internal pressure generated upward from the winding-center hole is excessively high, the center of the open area 141 may receive a high pressure, so that bending may occur in the approximately central area of the open area 141. In this case, the approximately central area of the open area 141 may be opened, whereas the outer area thereof may not be sufficiently opened, failing to obtain sufficient venting performance through the open area 141.

In the case where the bending line 144 is disposed near the boundary line between the open area 141 and the fixed area 142, if the internal pressure of the battery housing increases, a part of the open area 141 near the bending line 144 is more likely to bend, rather than an arbitrary part of the open area 141 bending. According to the present embodiment, the open area 141 may be bent in a part close to the fixed area 142, and the open area 141 may be opened as widely as possible, thereby ensuring the venting performance through the open area 141.

Referring to FIG. 9, like the breaking grooves 1431 and 1432, bending grooves 1441 and 1442 may also be configured as a notch. The bending grooves 1441 and 1442 may be configured as a line in which a notch formed to be recessed in the open area 141 extends in one direction. For example, the bending grooves 1441 and 1442 may be configured in the shape of a notch that becomes narrower as it gets deeper, but are not limited thereto.

The bending grooves 1441 and 1442 are intended to bend the open area 141, instead of breaking the open area 141, so they may be formed to be recessed with less depth and/or narrower width than the breaking grooves 1431 and 1432. If the bending grooves 1441 and 1442 are formed too deep or too wide, they may be broken along with the breaking grooves 1431 and 1432, so the width and depth may be designed to be appropriate for inducing bending.

For example, referring to FIG. 9, the bending line 144 may be formed by a first bending groove 1441 formed on the upper surface and a second bending groove 1442 formed on the lower surface, which extend in one direction. However, this is exemplary, and the bending line 144 may be formed by a bending groove formed to extend in one direction on one of either the upper surface or the lower surface. That is, the bending groove may be formed on both the upper surface and the lower surface of the open area 141 as shown in FIG. 9, or may be selectively formed on one of either the upper surface or the lower surface.

FIG. 10 is a drawing illustrating a lower structure of a battery according to an embodiment of the present disclosure.

Referring to FIG. 10, the battery 100 may include a first terminal 161. The first terminal 161 may be electrically coupled to a second uncoated portion 112 of the electrode assembly 110. Similar to the first uncoated portion 111 described above, the second uncoated portion 112 may be formed at one end of the second electrode. The second uncoated portion 112 may extend in the winding direction of the electrode assembly 110. The second uncoated portion 112 may be provided on a side opposite the side on which the first uncoated portion 111 is provided, among both sides of the electrode assembly 110, and may extend, for example, downward in the electrode assembly 110. The first terminal 161 may be partially inserted into the battery housing 120 through, for example, the closed portion of the battery housing 120. The first terminal 161 may be configured to be insulated from the battery housing 120. For example, a second insulating member 152 may be interposed between the first terminal 161 and the battery housing 120. As described above, in the case where the first terminal 161 is provided on the closed portion of the battery housing 120, the outer surface of the closed portion of the battery housing 120 may function as a second terminal 162.

The battery 100 may include a second current collector 132 configured to electrically connect the first terminal 161 and the electrode assembly 110. The second current collector 132 may be electrically coupled to the first terminal 161. For example, the second current collector 132 and the first terminal 161 may be welded by radiating a laser beam or inserting a tool for welding through the winding-center hole 113 of the electrode assembly 110 from the opening of the battery housing 120.

In the case where the battery 100 of the present disclosure has a second current collector 132, an insulator 170 may be interposed between the second current collector 132 and the closed portion of the battery housing 120. The insulator 170 may prevent contact between the second current collector 132 and the battery housing 120, which have different polarities.

FIG. 11 is a drawing illustrating a battery pack according to an embodiment of the present disclosure.

Referring to FIG. 11, a battery pack 1 according to an embodiment of the present disclosure may include one or more batteries 100 described above with reference to other drawings. In addition, the battery pack 1 may further include configurations other than the battery 100 according to the present disclosure. For example, the battery pack 1 according to the present disclosure may further include configurations such as a BMS (Battery Management System), a bus-bar, a relay, and a current sensor.

The battery pack 1 may further include a pack case 200. The pack case 200 may provide a space in which one or more batteries 100 are to be stored. In the case where the battery pack 1 includes a plurality of batteries 100, the pack case 200 may include spaces divided to store the plurality of batteries 100 separately.

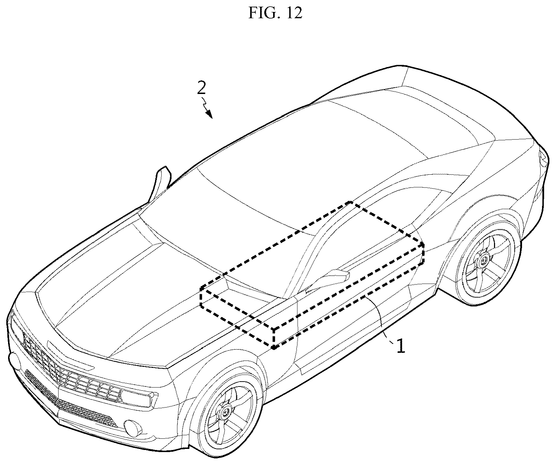

FIG. 12 is a drawing illustrating a battery, a battery pack including the same, and a vehicle including the same.

Referring to FIG. 12, a vehicle 2 may include one or more battery packs 1. For example, the vehicle 2 may be any one of an electric vehicle, a hybrid vehicle, or a plug-in hybrid vehicle, but is not limited thereto. The vehicle 2 may be any one of a four-wheel vehicle and a two-wheel vehicle. The vehicle 2 may operate by receiving power from a battery pack 1 or a battery module according to the embodiments of the present disclosure.

Some embodiments or other embodiments of the present disclosure described above are not exclusive or distinct from each other. Configurations or functions may be used in combination with each other between some embodiments or other embodiments of the present disclosure described above.

For example, it means that configuration A described in a specific embodiment and/or drawing and configuration B described in another embodiment and/or drawing may be combined. That is, even if the combination between the configurations is not directly described, the combination is possible, unless described otherwise.

The detailed description above should be considered as those intended to illustrate the present disclosure, instead of those intended to limit the present disclosure. The scope of the present disclosure should be determined by a reasonable interpretation of the appended claims, and all changes falling within the equivalency range of the present disclosure are included in the scope of the present disclosure.

## Claims

1. A battery comprising:
an electrode assembly having a winding-center hole formed by winding a laminate comprising a first electrode, a second electrode, and a separator interposed therebetween;
a battery housing having an opening formed on one side and capable of accommodating the electrode assembly in an inner space; and
a cap configured to cover the opening and comprising a fixed area fixed to the battery housing and an open area surrounded by the fixed area,
wherein the open area comprises a plurality of breaking lines formed to be recessed, and wherein, if internal pressure of the battery housing increases to a predetermined pressure or more, at least some of the breaking lines are broken so that at least a part of the open area is bent toward the fixed area and opened.

2. The battery according to claim 1,
wherein at least some of the plurality of breaking lines are formed in a straight line that crosses the open area in one direction.

3. The battery according to claim 1,
wherein at least some of the plurality of breaking lines are configured to pass through an approximately central area of the cap disposed above the winding-center hole.

4. The battery according to claim 1,
wherein at least some of the plurality of breaking lines are formed radially from an approximately central area of the cap disposed above the winding-center hole toward the fixed area.

5. The battery according to claim 1,
wherein the open area is configured such that entirety thereof is bent toward the fixed area and opened.

6. The battery according to claim 1,
wherein at least some of the plurality of breaking lines are formed to be recessed from one of either an upper surface or a lower surface of the open area.

7. The battery according to claim 1,
wherein at least some of the plurality of breaking lines are formed to be recessed from both an upper surface and a lower surface of the open area.

8. The battery according to claim 1,
wherein the open area further comprises a bending line formed to be recessed in an area in which the open area is bent.

9. The battery according to claim 8,
wherein at least a part of the bending line is formed to surround an area where the plurality of breaking lines are formed.

10. The battery according to claim 8,
wherein at least a part of the bending line is formed near a boundary line between the fixed area and the open area.

11. The battery according to claim 8,
wherein the bending line is formed to be recessed to a depth less than the breaking line.

12. A battery pack comprising a battery according to any one of claims 1 to 11.

13. A vehicle comprising a battery pack according to claim 12.
